# EUROPÄISCHE PATENTSCHRIFT

(11) **EP 2 086 102 B1**
(45) Veröffentlichungstag und Bekanntmachung des Hinweises auf die Patenterteilung: **22.09.2010**
(21) Anmeldenummer: 09006359.5
(22) Anmeldetag: 15.05.2003
(51) Int. Cl.: H02M 7/53, H02M 7/5387

(54) **Wechselrichter zum Umwandeln einer elektrischen Gleichspannung in einen Wechselstrom oder eine Wechselspannung**
Inverter for converting an electric direct current into an alternating current or an alternating voltage
Onduleur destiné à convertir une tension continue électrique en un courant alternatif ou une tension alternative

(30) Priorität: 15.05.2002 DE 10221592
(43) Veröffentlichungstag der Anmeldung: 05.08.2009
(62) Teilanmeldung aus: 03009882.6
(73) Patentinhaber: Fraunhofer-Gesellschaft zur Förderung der angewandten Forschung e.V., 80686 München (DE)
(72) Erfinder: Schmidt, Heribert, 79117 Freiburg (DE); Siedle, Christoph, 79108 Freiburg (DE); Ketterer, Juergen, 79256 Buchenbach (DE)
(74) Vertreter: Zimmermann, Tankred Klaus

(56) Entgegenhaltungen:
- EP-A- 0 203 571
- EP-A- 1 107 439
- DE-C1- 19 642 522
- DE-C1- 19 732 218
- MOHAN, N., UNDELAND, T. M., ROBBINS, W.: "POWER ELECTRONICS- Converters, Applications and Design" 1995, JOHN WILEY & SONS, INC. , NEW YORK, CHICHESTER, BRISBANE, TORONTO, SINGAPORE , XP002551113 ISBN: 0-471-58408-8 * Abbildungen 17-15 * * Seiten 478-479 *
- MYRZIK JOHANNA: "Topologische Untersuchungen zur Anwendung von tief- hochsetzenden Stellern für Wechselrichter" TOPOLOGISCHE UNTERSUCHUNGEN ZUR ANWENDUNG VON TIEF-, HOCHSETZENDEN STELLERN FÜR WECHSELRICHTER, KASSEL UNIV. PRESS, KASSEL, 1. Januar 2001 (2001-01-01), Seiten 1-175, XP008103662 ISBN: 978-3-933146-62-5

## Beschreibung

### Technisches Gebiet

Die Erfindung bezieht sich auf einen Wechselrichter zum Umformen einer elektrischen Gleichspannung in einen Wechselstrom oder eine Wechselspannung. Derartige Stromrichter werden bspw. zur elektrischen Energieeinspeisung in das öffentliche Stromnetz oder zur Bildung eines autarken inselnetzes In Fällen eingesetzt, in denen lediglich Gleichspannungsenergiequellen zur Verfügung stehen, wie z. B. Photovoltaikanlagen, Brennstoffzellen, Batterien, etc..

### Stand der Technik

Bei einem Wechselrichter zur Einspeisung von Energie in ein vorhandenes Wechselspannungsnetz gilt es, einen Wechselstrom zu erzeugen, der in Bezug auf Phasenlage und Amplitude an den Potenzialverlauf der Wechselspannung, vorzugsweise einer 50 oder 60 Hz sinusförmig ausgebildeten Netzspannung, anzugleichen ist. Bei einem Wechselrichter zur Speisung eines autarken inselnetzes hingegen gilt es, eine in Spannung und Frequenz stabile Wechselspannung zu erzeugen. Zum Betrieb beliebiger kapazitiver und induktiver Verbraucher muss ein solcher Wechselrichter in der Lage sein, Blindleistung abzugeben bzw. aufzunehmen.

In an sich bekannter Weise dienen hierzu ein- oder dreiphasige Wechselrichter mit und ohne Transformator. Ein Überblick über die Vielzahl der dabei möglichen Ausführungsformen derartiger Wechselrichter findet sich in folgenden Quellennachweisen:
[1] Myrzik, Johanna, Topologische Untersuchungen zur Anwendung von tief/- hochsetzenden Stellern für Wechselrichter / Johanna Myrzik. - Kassel: kassel univ. press, 2001, Zugl.: Kassel, Univ., Diss. 2000, ISBN 3-933146-62-3;
[2] Manfred Meyer, Leistungselektronik, Einführung, Grundlagen, Überblick, Springer-Verlag, Berlin Heidelberg New York London Paris Tokyo Hong Kong Barcelona 1990; und
[3] POWER ELECTRONICS, Converters, Applications and Design, Second Edition, JOHN WILEY & SONS, INC., New York Chichester Brisbane Toronto Singapore, 1989, 1995.

Bei den genannten Anwendungsfällen stehen immer ein bei allen Belastungen hoher Umwandlungswirkungsgrad, ein gutes EMV-Verhalten, ein geringes Volumen und Gewicht sowie ein niedriger Preis im Vordergrund. Eine galvanische Trennung zwischen Gleich- und Wechselspannungsseite ist im Allgemeinen nicht erforderlich.

Eine unter diesen Randbedingungen bislang günstigste Schaltung stellt eine transformatoriose Vollbrückenschaltung dar, die detailliert in [3] und [1] beschrieben ist. Hier werden ebenfalls die im weiteren näher erläuterten unterschiedlichen Taktungsarten der Vollbrückenschaltung dargestellt. Vorteilhaft bei dieser Topologie ist ein hoher Umwandlungswirkungsgrad und ein geringes Volumen und Gewicht. Nachteilig ist jedoch, abhängig von der eingesetzten Taktungsart, ein schlechtes EMV-Vefialten auf der Eingangsseite sowie teilweise das Fehlen eines 4-Quadranten-Betriebes (Blindleistungsfähigkeit).

Ferner sind aus obigem Beitrag von Myrzik transformatorlose Wechselrichter-Topologien bekannt, die aus einer Kombination von tief- und hochsetzenden Stellem (Cuk- und Zeta-Wandlern) hervorgehen. Diese haben gegenüber den oben genannten Brückenschaltungen den Vorteil, dass die Eingangsspannung betragsmäßig sowohl kleiner als auch größer als der Maximalwert (Amplitude) der sinusförmigen Netzspannung sein kann. Bei der Brückenschaltung hingegen muss sie immer größer als die Netzspannungsamplitude sein, um eine Einspeisung in das Netz zu ermöglichen.

Auf einem vergleichbaren Ansatz beruhen auch die in den DE 196 42 522 C2 und DE 197 32 218 C1 beschriebenen transformatorlosen Topologien, wobei bei diesen auf hoch-/tiefsetzenden Wandlern bzw. Cuk- und Zeta-Wandlern basierenden Schaltungen als Vorteil insbesondere die elektrische Verbindung eines der Solargeneratoranschlüsse mit einem festen Potenzial (Neutralleiter) genannt wird, wodurch sich Vorteile für das EMV-Verhalten ergeben.

Bei allen zuletzt genannten Topologien ist jedoch als wesentlicher Nachteil zu nennen, dass entweder die gesamte oder zumindest ein großer Anteil der zum Ausgang übertragenen Energie in einer Drosselspule zwischengespeichert oder auch über Koppelkondensatoren zum Ausgang übertragen werden muss. Daraus resultiert bei allen Schaltungen ein gegenüber der einfachen Brückenschaltung deutlich geringerer Wirkungsgrad. Weiterhin sind sie z. T. sehr komplex und regelungstechnisch schwer beherrschbar.

Aus der EP 0 203 571 B1 geht weiterhin ein gattungsgemäßer Wechselrichter hervor, der es ermöglicht, im Betrieb als Inselwechselrichter kurzzeitig einen Ausgangsstrom zu erzeugen, der ein Vielfaches des Nennstromes beträgt. Dieser hohe Strom wird benötigt, um im Falle eines Kurzschlusses standardmäßige Sicherungsautomaten zum Auslösen zu bringen. Das dort beschriebene Verfahren ist also im normalen Betrieb nicht im Einsatz, sondern wird durch eine entsprechende Auswerteschaltung ausschließlich im Kurzschlussfall aktiviert.

Die weiteren Ausführungen sollen im einzelnen das bestehende Wechselrichterproblem erhellen, insbesondere unter Bezugnahme auf einphasige, transformatorlose Wechselrichter, doch sei an dieser Stelle angemerkt, dass die im weiteren beschriebenen Maßnahmen grundsätzlich auch auf Wechselrichter jeweils mit Transformator übertragbar sind. Nur aus Gründen der Vollständigkeit sei ferner darauf hingewiesen, dass neben einphasigen Wechselrichtern auch mehrphasig arbeitende Geräte, vorzugsweise 3-phasige Wechselrichter, existieren, mit denen bspw. die Umwandlung von Gleichspannung in drei jeweils um 120° phasenverschobene periodische Strom- bzw. Spannungsverläufe möglich ist. Auch auf derartige, mehrphasige Wechselrichtersysteme können die im weiteren dargelegten Ausführungen Anwendung finden.

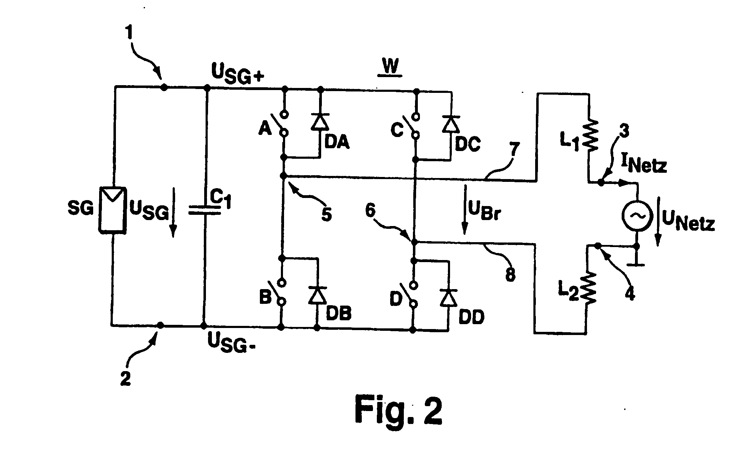

Betrachtet werde im weiteren die oben genannte und an sich bekannte Schaltungstopologie eines einphasigen, transformatorlosen Wechselrichters, der gemäß dem bekannten Ausführungsbeispiel in Figur 2 zwei Gleichspannungsanschlüsse 1, 2, mit denen in diesem Beispiel ein externer Solargenerator SG als Gleichspannungsquelle verbunden ist, sowie zwei Wechselspannungsanschlüsse 3, 4 vorsieht, die entweder mit dem konventionellen 50 Hz-Stromnetz verbunden sind oder im Falle des inselbetriebes an die elektrischen Verbraucher angeschlossen sind. Zur Umwandlung der konstanten Solargeneratorgleichspannung U_{SG} In einen für die Netzeinspeisung geeigneten Wechselstrom oder in eine im Inselbetrieb erforderliche Wechselspannung sieht der einphasige, transformatorlose Wechselrichter W einen Pufferkondensator C₁ vor, der parallel zu einer Vollbrücke geschaltet ist, bestehend aus vier Schaltereinheiten A, B, C, D sowie jeweils mit diesen antiparallel geschalteten, als Freilaufdioden bezeichneten Gleichrichterdioden DA, DB, DC sowie DD.

Die einzelnen Schaltereinheiten A, B, C, D sind als Hochfrequenzschalter ausgebildet, die geeignet sind, Schaltvorgänge mit Frequenzen von bis zu einigen 100 kHz zu realisieren. Derartige Schalter sind vorzugsweise als MOS-FeldeffektTransistoren oder als IGBT (Insulated Gate Bipolar Tansistor) ausgebildet.

Ein Brückenabgriff erfolgt jeweils mittig in den Parallelästen der Brückenschaltung an den Verbindungsknoten 5, 6 zwischen jeweils den Schaltereinheiten A, B sowie C, D mittels der Verbindungsleitungen 7, 8. Beide Verbindungsleitungen 7, 8 sind jeweils über eine Drosselinduktivität L₁ bzw. L₂ mit den Wechselspannungsanschlüssen 3, 4 verbunden. Zwischen den Verblndungsleltungen 7, 8 liegt die Brückenspannung U_{Br} an. Weitere, für einen sicheren Betrieb der in Figur 2 dargestellten Wechselrichteranordnung erforderliche Bauteile sind aus Gründen besserer Übersichtlichkeit nicht dargestellt, wie bspw. Filter zur Verbesserung der elektromagnetischen Verträglichkeit (EMV) sowie parasitäre Elemente, insbesondere Kapazitäten.

Zur Umwandlung der Solargeneratorspannung U_{SG} in einen zur Netzeinspeisung erforderlichen Wechselstrom oder in eine im Inselbetrieb erforderliche Wechselspannung gilt es, die Schaltereinheiten A, B, C, D mit einem bestimmten, hochfrequenten Taktmuster, das Schaltfrequenzen zwischen wenigen kHz bis zu einigen 100 kHz aufweisen kann, in aufeinander abgestimmter Weise zu öffnen und zu schließen, um zeitdiskret voneinander unterscheidbare Spannungspulse zu erzeugen, deren Potenziallage auf die extern angelegte bzw. im Inselbetrieb zu erzeugende Wechselspannung U_{Netz} abgestimmt wird. Mit Hilfe der in den Verbindungsleitungen 7, 8 vorgesehenen Drosselinduktivitäten L₁, L₂ ist es möglich, an den Ausgängen der Wechselspannungsanschlüssen 3, 4 einen glatten, sinusförmigen Strom- bzw. Spannungsverlauf zu erhalten.

Grundsätzlich werden drei unterschiedliche Taktungsmuster, mit denen die Schaltereinheiten A, B, C, D innerhalb der konventionellen Brückenschaltung angesteuert werden, voneinander unterschieden.

Im Falle der sog. symmetrischen Taktung werden stets die sich diagonal gegenüberliegenden Schaltereinheiten, d. h. A und D oder B und C zeitsynchron geschlossen bzw. geöffnet. Die Ansteuerung der einzelnen Schaltereinheiten erfolgt für eine erfolgreiche Einspeisung elektrischer Energie in das Netz derart, dass während einer positiven Halbwelle der an den Wechselspannungsanschlüssen 3, 4 anliegenden Netzwechselspannung die Schaltereinheiten A, D gemäß eines festgelegten Taktmusters, bspw. auf Basis einer Pulsweiten-Modulation (PWM), hochfrequent geschlossen und geöffnet werden, während die Schaltereinheiten B und C im geöffneten Zustand verharren oder auch gegenphaslg zu den Schaltern A, D angesteuert werden. Während der Öffnungsphasen der Schalter A und D kommutiert der Strom durch die Drosselspulen L₁, L₂ auf die diagonal gegenüberliegenden Freilaufdioden DB und DC bzw. die geschlossenen Schalter B, C. Im umgekehrten Fall einer vom Netz vorgegebenen negativen Halbwelle, werden die Schaltereinheiten B und C nach dem entsprechenden Taktmuster geschlossen und geöffnet, während die Schaltereinheiten A und D in der geöffneten Stellung verbleiben oder auch gegenphasig zu den Schaltern B, C angesteuert werden. Jetzt kommutiert der Drosselstrom auf die Freilaufdioden DA und DD bzw. die geschlossenen Schalter A, D.

Dies vorausgesetzt führt zu folgenden elektrischen Eigenschaften des Wechselrichters: Die Brückenspannung U_{Br} nimmt jeweils im Falle geschlossener Schaltereinheiten A und D bzw. leitender Freilaufdioden DA und DD die Spannung +U_{SG} an, und im Falle der geschlossenen Schaltereinheiten B und C bzw. leitender Freilaufdioden DB und DC die Spannung -U_{SG}. Setzt man ferner voraus, dass die Drosselinduktivitäten L₁ und L₂ ideal gleich ausgebildet sind, so teilt sich die Solargeneratorspannung U_{SG} in allen Fällen der symmetrischen Taktung symmetrisch zu dem durch die extern angelegte Wechselspannung definierten Bezugspotenzial (Momentanwert der Netz-Wechselspannung) auf.

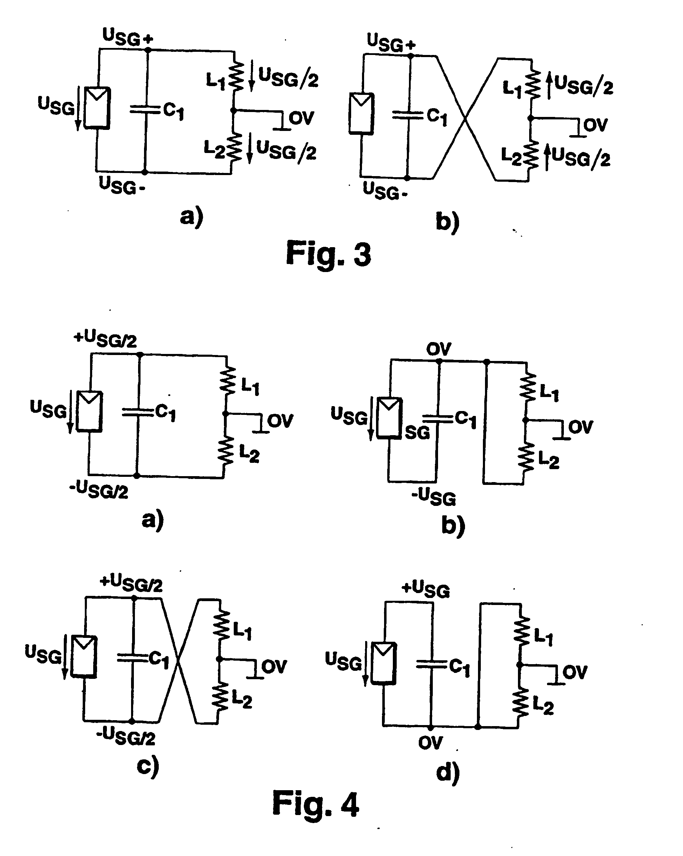

Zur Verdeutlichung dieser Verhältnisse sei auf die Figuren 3a und 3b Bezug genommen. Im Fall der Figur 3a sind die Schaltereinheiten A und D geschlossen bzw. DA und DD leitend, und es wird ein externes Bezugspotenzial von 0 V angenommen. Da sich die Solargeneratorspannung wie oben dargestellt symmetrisch zum Bezugspotenzial aufteilt, liegen die beiden Anschlussleitungen des Solargenerators auf den Potenzialen + U_{SG}/2 bzw. -U_{SG}/2.

In Figur 3b ist der Fall der geschlossenen Schaltereinheiten B und C bzw. leitender Freilaufdioden DB und DC dargestellt, der zu den gleichen Potenzialverhältnissen an den Anschlussleitungen des Solargenerators führt. Die Anschlussleitungen des Solargenerators liegen gemäß Figur 3a bzw. Figur 3b trotz hochfrequenter Taktung der einzelnen Schaltereinheiten A, B, C, D konstant auf den Potenzialen +U_{SG}/2 bzw. -U_{SG}/2.

Berücksichtigt man weiterhin die an den Anschlussleitungen des Wechselrichters anliegende externe Wechselspannung, die sich ebenfalls aufgrund der Induktivitäten L₁ und L₂ symmetrisch auf beide Anschlussleitungen aufteilt, so führt dies an den Solargeneratoranschlüssen zu einer mit halber Netzamplitude U_{Netz}/2 niederfrequent schwankenden Spannung, die keinerlei Sicherheitsprobleme sowie auch Probleme in Bezug auf die elektromagnetische Verträglichkeit aufwirft.

Jedoch sind mit der symmetrischen Betriebsweise des Wechselrichters zwei Nachteile unvermeidbar verbunden. Betrachtet man bspw. während der positiven Halbwelle der Netzspannung jene Zeiträume, in denen die Schaltereinheiten A und D geöffnet sind und berücksichtigt man, dass der innerhalb der Drosselinduktivitäten L₁ und L₂ fließende Spulenstrom aufgrund von Entmagnetisierungsvorgängen innerhalb der Drosselinduktivitäten weiter aufrecht bleibt, so kommutiert dieser Spulenstrom während der sog. "Freilaufphase" über die Dioden DB und DC bzw. die geschlossenen Schalter B, C zurück in den Pufferkondensator C₁, was mit erheblichen Verlusten verbunden ist, wodurch letztlich der Wirkungsgrad des Wechselrichters entscheidend negativ beeinflusst wird.

Weiterhin entstehen beim periodischen Einschalten der Schalter A, D erhebliche Schaltverluste aufgrund der nicht idealen dynamischen Eigenschaften der Freilaufdioden DB und DC, entsprechend auch in der negativen Halbwelle.

Hinzu kommt, dass während der Kommutierung des Spulenstromes durch die Dioden DB und DC bzw. die geschlossenen Schalter B, C in den Kondensator C₁ über den Drosselinduktivitäten L₁ und L₂ die Summe aus Eingangsspannung (z. B. die Solargeneratorspannung U_{SG}) und momentaner Netzspannung mit umgekehrter Polarität anliegt. Ein diesbezügliches Ersatzschaltbild ist der Figur 3b zu entnehmen, das gleichsam auch auf den vorstehend geschilderten Fall der Freilaufphase Anwendung findet. Durch die hohe Spannung werden die Drosselinduktivitäten L₁, L₂ schnell entmagnetisiert, wodurch hohe Stromschwankungen, ein sogenannter Stromrippel, im Ausgangsstrom entstehen, die letztlich zu merklichen Verlusten in der Spule und zu EMV-Problemen führen.

Bei der sog. unsymmetrische Taktung treten im Gegensatz zur vorstehend erläuterten symmetrischen Taktung folgende, jeweils paarweise geschlossene Schalterstellungen der Schaltereinheiten A, B, C, D auf: A und D oder B und C (wie vorstehend zum symmetrischen Fall geschildert) oder A und C oder B und D sind gleichzeitig geschlossen und wechseln sich unmittelbar in bestimmter Reihenfolge ab, ohne dabei einen Schaltungszustand zuzulassen, in dem alle vier Schaltereinheiten A, B, C, D dauerhaft geöffnet sind.

Diese Taktung ist mit folgenden Vorteilen verbunden: Im Falle der als unsymmetrisch bezeichneten zusätzlichen Schalterkonstellationen, in denen A und C oder B und D gleichzeitig geschlossen sind, reduziert sich die Brückenspannung U_{Br} auf 0 V. Dieser auch als "Nullzeiger" bezeichnete Schaltungszustand verhindert somit ein Kommutieren des Spulenstromes über etwaige Freilaufdioden hin zum Pufferkondensator C₁, wodurch der Wirkungsgrad des Wechselrichters entscheidend gegenüber der symmetrischen Taktung verbessert wird. Weiterhin liegt im unsymmetrischen Schaltungszustand nicht die Summe aus momentaner Netzspannung und Solargeneratorspannung U_{SG} über den Drosselinduktivitäten L₁, L₂ an, sondern lediglich die momentane Netzspannung U_{Netz}, die zum Abbau des Spulenstroms beiträgt. Aufgrund der sehr viel geringeren Spannung bilden sich die Stromschwankungen (Stromrippel) im Ausgangsstrom erheblich kleiner aus, wodurch der Wirkungsgrad steigt und auch die elektromagnetische Verträglichkeit verbessert wird.

Jedoch ist auch mit der unsymmetrischen Taktung ein Nachteil unvermeidbar verbunden, der anhand der Figuren 4a bis 4d dargestellt ist. Nur aus Gründen leichteren Verständnisses sei angenommen, dass die momentane Wechselspannung in den der Figuren 4a - d entnehmbaren Ersatzschaltbildern 0 V entspricht. Die Ersatzschaltbilder gemäß der Figuren 4a und 4c entsprechen den Schaltungszuständen bei geschlossenen Schaltereinheiten A und D sowie B und C, also entsprechend der symmetrischen Taktung. In beiden Fällen liegen an den Anschlussleitungen des Solargenerators SG konstante Potenziale an, nämlich + U_{SG}/2 bzw. - U_{SG}/2. In den in den Figuren 4b und 4d dargestellten Schaltungszuständen sind die Schalter A und C bzw. B und D geschlossen. Hierbei liegen die Anschlussleitungen des Solargenerators SG jedoch nicht mehr auf den konstanten Potenzialen + U_{SG}/2 bzw. - U_{SG}/2, sondern sie springen im Fall der Figur 4b auf die Werte 0 V bzw. - U_{SG} sowie im Fall der Figur 4d auf + U_{SG} bzw. 0 V.

Bei einer von 0 V verschiedenen Netzspannung U_{Netz} teilt sich diese in allen Taktphasen ebenfalls symmetrisch auf die beiden Drosselinduktivitäten L₁ und L₂ auf, so dass bspw. an der positiven Solargenerator-Anschlussleitung periodisch folgende Potenziale auftreten: (U_{SG}/2 + U_{Netz}/2), (U_{Netz}/2) sowie (U_{SG} + U_{Netz}/2).

Eingedenk der Tatsache, dass typische Solargeneratorspannungen im Bereich zwischen 400 V und 750 V liegen, können unter Berücksichtigung des Potenzialbeitrages durch die Netzspannung an den Anschlußleitungen des Solargenerators Potenzialschwankungen zwischen 0 V und ca. 1 kV auftreten. Diese Potenzialschwankungen treten jedoch als hochfrequente Spannungssprünge mit Frequenzen von bis zu mehr als 100 kHz auf und führen zu überaus großen Ableitströmen über parasitäre Kapazitäten, wie sie an großflächigen Solargeneratoren typischerweise vorzufinden sind, wodurch die elektromagnetische Verträglichkeit derartiger Systeme entscheidend verschlechtert wird. Zudem stellen die hochfrequenten Spannungssprünge ein beträchtliches Gefährdungspotenzial bei Berührung der isolierten Moduloberflächen aufgrund einer kapazitiven Kopplung dar.

Eine dritte, in der vorstehenden Dissertation von Myrzik [1] beschriebenen Taktungsart, stellt das sog. Einphasen-Chopping dar. Hierbei wird ein Brückenzweig, z. B. die Schalter C, D, nur mit der Netzfrequenz (50 Hz oder 60 Hz) periodisch umgeschaltet, während der andere Brückenzweig hochfrequent sinusmoduliert getaktet wird. So ist z. B. während der positiven Halbwelle der Schalter D permanent geschlossen, und die Schalter A, B werden getaktet. Hierdurch ergibt sich für den Zeitabschnitt, in dem sowohl der Schalter B als auch D gleichzeitig geschlossen sind, eine Brückenspannung von 0 V (Nullzeiger), so dass auch mit dieser Taktungsart wie bei der oben beschriebenen unsymmetrischen Taktung ein sehr guter Wirkungsgrad erzielt wird.

Wie oben ergibt sich aber auch beim Einphasen-Chopping der gravierende Nachteil, dass abwechselnd entweder der positive oder der negative Pol des Solargenerators über die Schalter C, D mit dem Neutralleiter verbunden wird. Das Pozential des Solargenerators springt also periodisch um die Höhe der Solargeneratorspannung gegenüber Erdpotenzial, wodurch, wie oben dargestellt, erhebliche EMV-Probleme aufgeworfen werden.

Die EP 1 107 439 A2 beschreibt einen Leistungskonditionierer für eine Solaranlage, der einen Wandler sowie einen Inverter aufweist, um eine durch die Solaranlage erzeugte Gleichstromleistung in eine Wechselstromleistung umzuwandeln. Der Wandler und der Inverter umfassen Schaltelemente, die durch umgekehrt parallel verschaltete, selbstsperrende Halbleiterelemente und Freilaufdioden gebildet sind, ohne dass Transformatoren vorgesehen sind. Der Inverter ist eine Schaltung, deren Impedanz zwischen dem Eingang und dem Ausgang hoch wird, wenn alle Schaltelemente ausgeschaltet sind, die in einer Vollbrücke oder in einer Halbbrücke verschaltet sein können.

### Darstellung der Erfindung

Ausgehend von dem vorstehend geschilderten Stand der Technik liegt der Erfindung die Aufgabe zugrunde, einen Wechselrichter anzugeben, der die Vorteile der vorstehend erläuterten symmetrischen und unsymmetrischen Taktung sowie des Einphasen-Choppings in sich vereint und gleichzeitig die mit der vorstehend genannten Technik verbundenen Nachteile vermeidet. Insbesondere soll ein Wechselrichter unter Vermeidung des Einsatzes komplizierter und kostenaufwändiger Schaltungstopologien angegeben werden, der über einen verbesserten Wirkungsgrad und eine bessere elektromagnetische Verträglichkeit als bisher bekannte Wechselrichter verfügt. Zudem gilt es, eine Möglichkeit für einen wahlweisen Netz- oder Inselbetrieb des Wechselrichters zu schaffen.

Die Lösung der der Erfindung zugrunde liegenden Aufgabe ist im Anspruch 1 und im Anspruch 9 angegeben. Den Erfindungsgedanken vorteilhaft weiterbildende Merkmale sind Gegenstand der Unteransprüche sowie der Beschreibung unter Bezugnahme auf die Ausführungsbeispiele zu entnehmen.

Erfindungsgemäß ist ein Wechselrichter mit zwei Gleichspannungsanschlüssen, zwischen denen in paralleler Schaltungsanordnung ein Energiezwischenspeicher sowie eine Brückenschaltung vorgesehen sind, die wenigstens zwei Paralleläste, die jeweils zwei in Reihe geschaltete Schaltereinheiten vorsieht, zu denen jeweils eine Gleichrichterdiode parallel geschaltet ist, sowie mit wenigstens zwei Wechselspannungsanschlüssen, von denen jeder einzeln über eine

Verbindungsleitung, in der jeweils eine Drosselinduktivität vorgesehen ist, mit einem der Paralleläste der Brückenschaltung jeweils zwischen zwei Schaltereinheiten über einen Verbindungsknoten verbunden ist, dadurch weitergebildet, dass zwischen den wenigstens zwei Verbindungsleitungen zwei elektrische Verbindungspfade vorgesehen sind, in denen jeweils ein Schalter sowie eine in Reihe geschaltete Gleichrichterdiode vorgesehen sind, und dass die Gleichrichterdioden in den einzelnen Verbindungspfaden zueinander in entgegengesetzter Durchlassrichtung geschaltet sind.

Wie im einzelnen aus den weiteren Ausführungen hervorgeht, werden die Schalter E und F während des Betriebes des Wechselrichter getaktet betrieben.

An dieser Stelle sei vermerkt, dass sich der Erfindungsgedanke zudem auch auf mögliche äquivalente Ausführungen zur erfindungsgemäßen Schaltungstopologie erstreckt, die durch Verwendung alternativer elektronischer Bauelemenanordnungen und entsprechende Substitution der Kombination aus Schalter und Gleichrichterdiode in den Verbindungsleitungen gewonnen werden können und gleiche oder ähnliche elektrische bzw. elektronische Wirkungen im Schaltverhalten zeigen. So ist insbesondere eine Kombination aus Schalter und Gleichrichterdiode in Ausbildung nur eines einzigen elektronischen Bauelementes denkbar, dessen Einsatz durchaus auch unter den allgemeinen Erfindungsgedanken zu subsummieren ist.

Zur einfacheren Darstellung des Erfindungsgedankens sei jedoch zunächst auf einen Wechselrichter Bezug genommen, der gemäß Anspruch 1 zwei parallel geführte Verbindungspfade zwischen den zwei Verbindungsleitungen vorsieht.

Mit der erfindungsgemäßen Maßnahme des Vorsehens der zusätzlichen Verbindungspfade zwischen den Verbindungsleitungen zum Abgriff der Brückenspannung eröffnet sich die Möglichkeit für alternative Freilaufpfade, längs der sich der Drosselstrom aufgrund Entmagnetisierungsvorgänge der Drosselinduktivitäten ausbreiten kann.

Hierdurch wird der Wirkungsgrad des Wechselrichters erheblich verbessert, da keine mit der Energierückspeisung in den Pufferkondensator verbundenen Energieverluste auftreten können. Zugleich liegt im Freilauffalle nicht wie beim Stand der Technik (symmetrische Taktung) die Summe aus Solargeneratorspannung und momentaner Netzspannung über den Drosselinduktivitäten an, sondern lediglich die momentane Netzspannung, wodurch die beim Stand der Technik (symmetrische Taktung) als nachteilhaft aufgezeigten Stromrippel im Ausgangsstrom deutlich reduziert werden können.

Schließlich ermöglichen die zusätzlichen, erfindungsgemäß vorgesehenen Freilaufpfade während der Freilaufphase eine vollständige ohmsche Entkopplung zwischen den Gleichspannungsanschlüssen und der damit verbundenen Gleichspannungsquelle, vorzugsweise einem Solargenerator, und den Wechselspannungsanschlüssen. Dies hat in vorteilhafter Weise zur Folge, dass hochfrequente Spannungssprünge an den Anschlussleitungen des Solargenerators, wie sie beim Stand der Technik (unsymmetrische Taktung bzw. Einphasen-Chopping) auftreten, prinzipiell vermieden werden. Damit ist das eingangs erläuterte Gefährdungspotenzial sowie die diskutierte Problematik in Bezug auf die elektromagnetische Verträglichkeit beim Betrieb eines derartigen Wechselrichters zu einem Grad der Unbedenklichkeit reduziert.

Weitere, mit dem erfindungsgemäßen ausgebildeten Wechselrichter verbundene Vorteile, die sich nicht zuletzt auf die Möglichkeit einer kostengünstigen Realisierung der hierfür erforderlichen Schaltungstopologie beziehen, werden im Weiteren unter Bezugnahme auf konkrete Ausführungsbeispiele näher erläutert.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierter Schaltungsaufbau eines erfindungsgemäß ausgebildeten Wechselrichters,
- Fig. 2: Wechselrichtertopologie gemäß Stand der Technik,
- Fig. 3: Ersatzschaltbilder zur Erläuterung der symmetrischen Taktung beim bekannten Wechselrichter gem. Figur 2,
- Fig. 4: Ersatzschaltbilder zur Erläuterung der unsymmetrischen Taktung beim bekannten Wechselrichter gem. Figur 2,
- Fig. 5: Ersatzschaltbilder zur Erläuterung des Potenzialverhaltens beim erfindungsgemäß ausgebildeten Wechselrichter,
- Fig. 6: Spannungsverlauf an der Anschlussleitung eines Solargenerators,
- Fig. 7: Darstellung zum Taktverhalten einzelner Schaltereinheiten,
- Fig. 8: Darstellung des Taktverhaltens einzelner Schaltereinheiten,
- Fig. 9: Schematisierter Schaltungsaufbau eines erfindungsgemäß ausgebildeten Wechselrichters im Inselbetrieb sowie
- Fig. 10: Darstellung zum Taktverhalten einzelner Schaltereinheiten im Inselbetrieb.

### Wege zur Ausführung der Erfindung, gewerbliche Verwendbarkeit

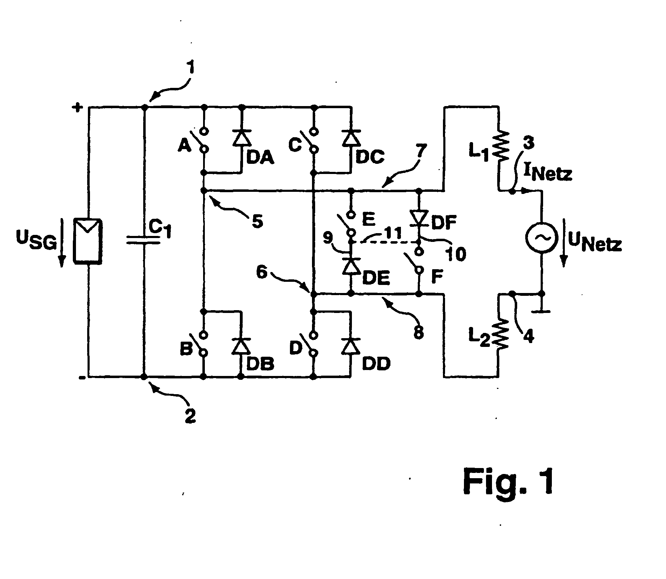

Gleichsam dem unter Bezugnahme auf Figur 2 als nächstkommenden Stand der Technik beschriebenen Schaltungsaufbau für einen Wechselrichter, weist auch der erfindungsgemäß ausgebildete Wechselrichter gemäß Figur 1 eine zwischen den Gleichspannungsanschlüssen 1, 2 geschaltete Parallelschaltung bestehend aus einem Energiezwischenspeicher C₁, vorzugsweise in Form eines Pufferkondensators, sowie eine Brückenschaltung auf. Die Brückenschaltung weist gleichsam der in Figur 2 dargestellten Brückenschaltung vier Schaltereinheiten A, B, C, D auf, zu denen jeweils Gleichrichterdioden DA, DB, DC, DD parallel geschaltet sind. Der erfindungsgemäße Unterschied zu der bekannten Topologie gemäß Figur 2 besteht im Vorsehen zweier zusätzlicher elektrischer Verbindungspfade 9, 10 zwischen den Verbindungsleitungen 7, 8 zum Abgriff der Brückenspannung U_{Br} an den Verbindungsknoten 5, 6. In den einzelnen Verbindungspfaden 9, 10 befinden sich jeweils ein Schalter E, F sowie eine Gleichrichterdiode DE, DF, die zueinander in entgegengesetzter Durchlassrichtung geschaltet sind. Alle übrigen Schaltungskomponenten entsprechen der in Figur 2 dargestellten, bekannten Schaltungsanordnung, so dass auf die einzelnen Komponenten nicht weiter Bezug genommen werden muss.

Selbstverständlich ist die Bauelementkombination aus Schalter E und Diode DE bzw. Schalter F und Diode DF in den einzelnen Verbindungspfaden 9, 10 auch durch gleichwirkende Bauelementkomponenten zu ersetzen, die in den einzelnen Verbindungspfaden 9, 10 über die gleichen Stromdurchlasseigenschaften verfügen wie die Schalter E bzw. F in Kombination jeweils mit den Dioden DE bzw. DF. Zwischen den Verbindungspfaden kann hierzu auch optional die gestrichelt eingezeichnete diagonale Verbindung 11 eingefügt sein, wodurch sich das Verhalten der Schaltung nicht grundsätzlich ändert, aber in der Praxis die vorteilhafte Zusammenfassung des Schalters E und der Diode DF bzw. F und DE in einem Bauteil, bspw. eines MOS-Fet mit parasitärer Diode oder in Form eines IGBT/Diode-Co-Pack, ermöglicht.

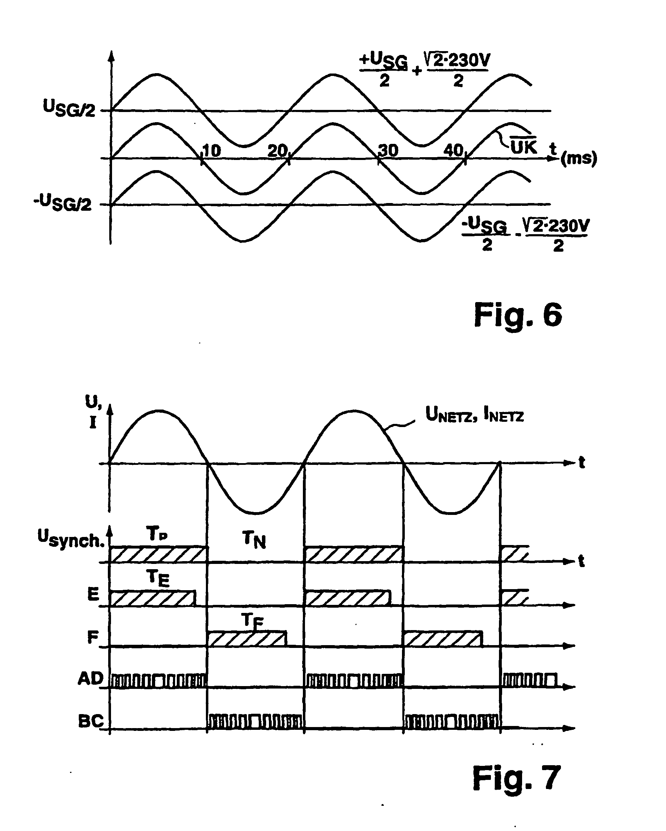

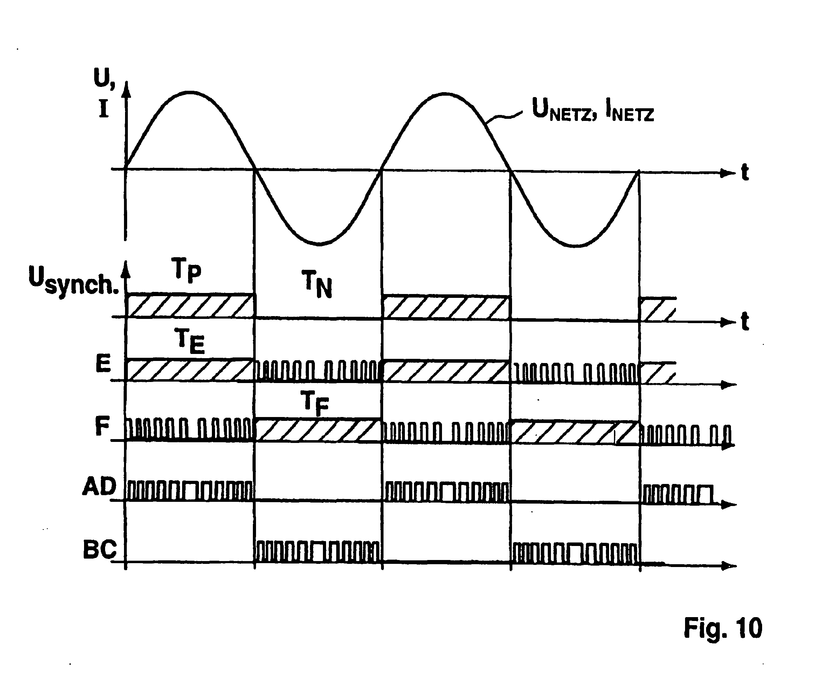

Die Betriebsweise des erfindungsgemäß ausgebildeten Wechselrichters erfolgt nach der eingangs erläuterten symmetrischen Taktung der in der Brückenschaltung vorgesehenen Schaltereinheiten A, B, C, D, d. h., in Abhängigkeit der Polarität der Halbwellen der Netzspannung U_{Netz} werden die Schalterpaare A und D bzw. B und C nach einem festgelegten Taktmuster geschlossen und geöffnet. Das Zeitverhalten, mit dem die einzelnen Schaltereinheiten A-D geschaltet werden, ist in den Figuren 7 und 10 dargestellt.

Figur 7 gibt die Taktung in der Betriebsart "Netzeinspeisung" wieder, bei der kein Blindleistungsbedarf besteht, also zu keiner Zeit ein Rückfluss von Energie aus dem Netz in den Pufferkondensator C₁ bzw. in die Gleichspannungsquelle U_{SG} erfolgt.

Das in Figur 10 dargestellte Taktungsschema hingegen ermöglicht einen vollständigen sogenannten 4-Quadranten-Betrieb, d. h., der Wechselrichter dient als Spannungsquelle zur Energieversorgung eines Verbrauchers, wobei der Wechselrichter ausgangsseitig nicht mit einem fest vorgegebenen Netzwechselspannungspotenzial verbunden ist. Dieser Fall entspricht dem eingangs erwähnten Inselbetrieb. Die Auswahl der beiden Taktungsarten kann je nach Anwendungsfall erfolgen.

In dem in Figur 7 dargestellten Zeitdiagrammen entspricht die oberste Diagrammdarstellung dem zeitlichen Verlauf der extern angelegten Netzspannung U_{Netz}. Mit Hilfe einer geeigneten Komparatorschaltung, auf die nicht im einzelnen eingegangen wird, kann eine rechteckförmige Synchronisationsspannung U_{synch.} erhalten werden, die zu Zeiten der positiven Halbwelle der Netzspannung einen konstanten positiven Spannungswert T_{P} und zu Zeiten der negativen Halbwelle bspw. 0 V annimmt. In Abhängigkeit der Synchronisationsspannung U_{synch.} und somit letztlich der Netzspannung werden die Schaltereinheiten A, D sowie B, C in Figur 7 angesteuert.

Bspw. werden im Falle einer positiven Halbwelle die Schaltereinheiten A, D synchron zu Beginn der positiven Halbwelle in kurz aufeinander folgenden Taktpulsen geschlossen und geöffnet, im Bereich der zeitlichen Mitte der positiven Halbwelle verlängern sich die Zeitabschnitte im geschlossenen Zustand, bis sie gegen Ende der positiven Halbwelle in gleicher Weise wie zu Anfang nur kurzzeitig geschlossen werden. Mit dem gleichen Taktmuster werden die Schaltereinheiten B, C moduliert, sofern die Halbwelle der Wechselspannung negativ ist. Die Art und Weise einer derartigen Schalterbetätigung ist eine an sich unter dem Begriff Pulsweitenmodulation (PWM) bekannte Technik. Wie bereits einleitend erwähnt, werden die Schaltereinheiten A, B, C, D mit Schaltfrequenzen von bis zu einigen 100 kHz beaufschlagt.

Im Gegensatz zu der hochfrequenten Taktweise, mit der die Schaltereinheiten A, B, C, D angesteuert werden, werden die Schalter E, F In den zusätzlichen Verbindungspfaden 9, 10 zeitsynchron mit der Wechselfrequenz der Netzspannung U_{Netz} betrieben, d. h. üblicherweise mit 50 Hz. So wird im dargestellten Beispiel gemäß Figur 7 der Schalter E während der überwiegenden Zeitdauer der positiven Halbwelle geschlossen, während der Schalter F geöffnet ist. Entsprechend umgekehrt schließt der Schalter F während der überwiegenden Zeitdauer der negativen Halbwelle bei geöffneter Schalterstellung E.

Betrachtet man nun jene kurzzeitigen Momente, in denen bspw. der Schalter E geschlossen ist, also während der positiven Halbwelle der Netzspannung, und bei geöffneter Schalterstellung der Schalter A, D, so kommutiert der positive Spulenstrom auf die Diode DE und gelangt somit nicht zum Pufferkondensator C₁ zurück. Ebenso ist im Falle der negativen Halbwelle der Schalter F geschlossen und bei geöffneter Schalterstellungen B, C kommutiert der Spulenstrom auf die Gleichrichterdiode DF (siehe hierzu Figur 1).

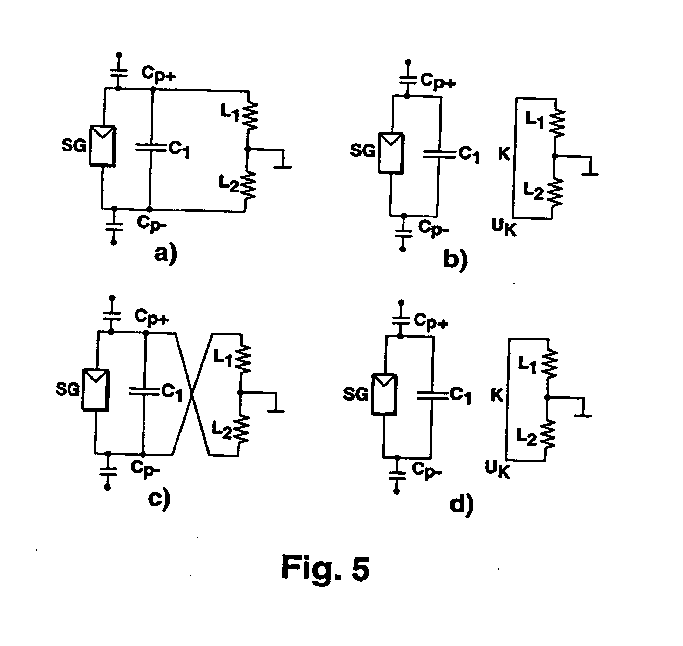

Es ergeben sich somit während des Betriebes des mit symmetrischer Taktung betriebenen Wechselrichters folgende in den Figuren 5 und 6 im Einzelnen dargestellte Potenzialverhältnisse.

Figuren 5a und c stellen Ersatzschaltbilder für die Wechselrichtertopologie in den Fällen geschlossener Schaltereinheiten A, D (siehe Figur 5a) sowie B, C (siehe hierzu Figur 5c) dar. Es zeigt sich grundsätzlich kein Unterschied zum bekannten Fall (siehe Figur 4a, c). Während der Freilaufphasen, d. h. bei geöffneten Schaltereinheiten A, D, stellt sich der in Figur 5b dargestellte Zustand ein, wohingegen das Ersatzschaltbild für die geöffnete Schalterstellung bezüglich der Schaltereinheiten B, C der Figur 5d zu entnehmen Ist. Es zeigt sich, dass während der sog. Freilaufphasen, d. h. die Schaltereinheiten A, B, C, D sind offen, gemäß der Ersatzschaltbilder in den Figuren 5b und d am Verbindungsknotenpunkt K aufgrund der symmetrischen Spulenanordnung L₁, L₂ die halbe Netzspannung U_{Netz}/2 anliegt. Die Spannung an dem Verbindungsknotenpunkt K liegt daher immer innerhalb der beiden an den Solargeneratoranschlussleitungen vorherrschenden Potenziale. Somit liegt unter Voraussetzung idealer Bauelemente während der Freilaufphasen keine ohmsche Verbindung zwischen dem Solargenerator und dem Netz vor. Dies jedoch führt zu dem erfreulichen Vorteil, dass hochfrequente Spannungssprünge, wie sie beim eingangs beschrieben bekannten Wechselrichter mit unsymmetrischer Taktung oder Einphasen-Chopping auftreten, gänzlich vermieden werden können. Überdies bleibt während der Freilaufphasen das Potenzial der Anschlussleitungen des Solargenerators aufgrund bestehender parasitärer Kapazitäten Cₚ₊ bzw. Cₚ₋ auf konstantem Potenzial. Diese Eigenschaft führt zu einer hohen elektromagnetischen Verträglichkeit ohne jegliches Gefährdungspotenzial.

Selbst wenn die eingesetzten Drosselspulen L1 und L2 nicht exakt über identische Induktivitäten verfügen - eine Forderung, die bei einer Schaltung nach dem Stand der Technik und symmetrischer Taktung mit großem Bedacht einzuhalten ist, will man den hochfrequenten Potenzialsprüngen Einhalt gebieten -, verschieben sich bei der erfindungsgemäßen Schaltung die mittleren Potenziale während beider Halbwellen nur geringfügig gegeneinander, sie sind nicht mehr exakt +/- Usg/2. Damit tritt beim Wechsel von einer Halbwellen zur anderen, d. h. mit 50 Hz, ein kleiner Potenzialsprung auf, der aber leicht beherrschbar ist. Somit können die Drosselinduldivltäten durchaus übliche Toleranzen aufweisen, gleichwohl die EMV erheblich verbessert ist.

Aus Figur 6 ist eine Diagrammdarstellung zu entnehmen, die die an den Solargeneratorleitungen anliegenden Spannungsverläufe zeigt. Symmetrisch und zeitsynchron verhalten sich das positive und negative Anschlusspotenzial auf den Solargeneratoranschlussleitungen, wobei im Falle des Anliegens einer Netzwechselspannung eine maximale Amplituden von U_{SG}/2 + √2x 230/2 V bei einer Frequenz von 50 Hz auftritt.

Ein weiterer interessanter Aspekt betrifft die Ausbildung der Gleichrichterdioden DA, DB, DC sowie DD, für deren Diodenqualität im Falle des erfindungsgemäß ausgebildeten Wechselrichters keine besonderen Anforderungen bestehen, da sie in den Freilaufphasen keine erwähnenswerte Kommutierungsfunktionen übernehmen, da die Kommutierung des Drosselstromes während der Freilaufphasen je nach Polarität der Halbwelle der Netzspannung über die Gleichrichterdioden DE bzw. DF erfolgt. Gleichwohl ihre Bedeutung und somit der Qualitätsanspruch an die Gleichrichterdioden reduziert ist, kann auf sie nicht völlig verzichtet werden. Der Grund hierfür liegt in der Notwendigkeit einer möglichst vollständigen Entmagnetisierung der Drosselinduktivitäten L₁, L₂ gegen Ende einer jeden Netzhalbwelle, die bei geschlossener Stellung des Schalters E bzw. F aufgrund der niedrigen zum Stromabbau zur Verfügung stehenden Netzspannung nicht gewährleistet werden kann. Aus diesem Grund sind die Schalter E bzw. F nicht während der gesamten Dauer der jeweiligen Halbwelle geschlossen, sondern öffnen bereits kurz vor Ende der jeweiligen Halbwellen, wie dies im Übrigen auch aus der Gegenüberstellung des Zeitverhaltens der einzelnen Schalter in Bezug auf die Halbwelle gemäß Figur 7 zu entnehmen ist. Das vorzeitige Öffnen des jeweiligen Schalters E bzw. F (siehe hierzu die verkürzten Schaltzeiten T_{E} bzw. T_{F} in Bezug auf die zeitliche Länge der jeweiligen Halbwellen in Figur 7) ist erforderlich, damit sich der in den Drosselspulen L₁, L₂ präsente Drosselstrom aufgrund der nach Öffnen des Schalters E bzw. F über den Spulen anliegenden Summe aus momentaner Netzspannung und Eingangsspannung schnell abbauen kann. Hierfür dienen die Gleichrichterdioden DA, DB, DC und DD gleichsam dem vorstehend beschriebenen Stand der Technik. So kommutiert bspw. der Drosselstrom während der positiven Halbwelle bei geöffneten Schaltern A - F über die Dioden DB und DC in den Kondensator C₁. Da das Öffnen der Schalter E bzw. F in Zeitbereichen erfolgt, in denen die Drosselströme weitgehend abgeklungen sind, treten jedoch keine nennenswerten Stromrlppel-Effekte auf, die den Vorteil der erfindungsgemäßen Schaltungstopologie zu beeinträchtigen vermögen.

Das zeitliche Ansteuern der Schaltereinheiten E und F erfolgt über eine Steuereinheit, die im einfachsten Ausführungsbeispiel über diskrete Zeitglieder realisierbar ist. Nachteilhaft bei der Verwendung von Zeitgliedern mit konstanter Einschaltzeit T_{E} bzw. T_{F} ist die Tatsache, dass nicht ausgeschlossen werden kann, dass die Schalter E, F in Bezug auf den Verlauf der Wechselspannung zu früh oder zu spät geöffnet werden, wodurch Wirkungsgradverluste sowie EMV-Probleme, wie sie aus dem Stand der Technik bekannt sind, auftreten.

Eine bevorzugte Ausführung des zeitlichen Ansteuems der Schalter E, F basiert auf der Nutzung des Fehlersignals des Stromreglers und der Phaseninformation über die Netzspannung. Ein derartiger gemäß dem Stand der Technik in der Wechselrichtersteuerung vorhandener Stromregler bildet stets die Differenz aus einem sinusförmigen Strom-Sollwert und dem tatsächlichen Strom-Istwert.

Die als Fehlersignal FS bezeichnete Differenz aus Strom-Sollwert und Strom-Istwert ist in der positiven Halbwelle positiv, sofern der Ausgangsstrom kleiner als der Sollwert ist und negativ, falls er über dem Sollwert liegt. Dieses Fehlersignal FS verfügt näherungsweise über einen sinusförmigen Verlauf und steuert über einen Pulsweiten-Modulator (PWM) die Einschaltzeiten der Schaltereinheiten A bis D.

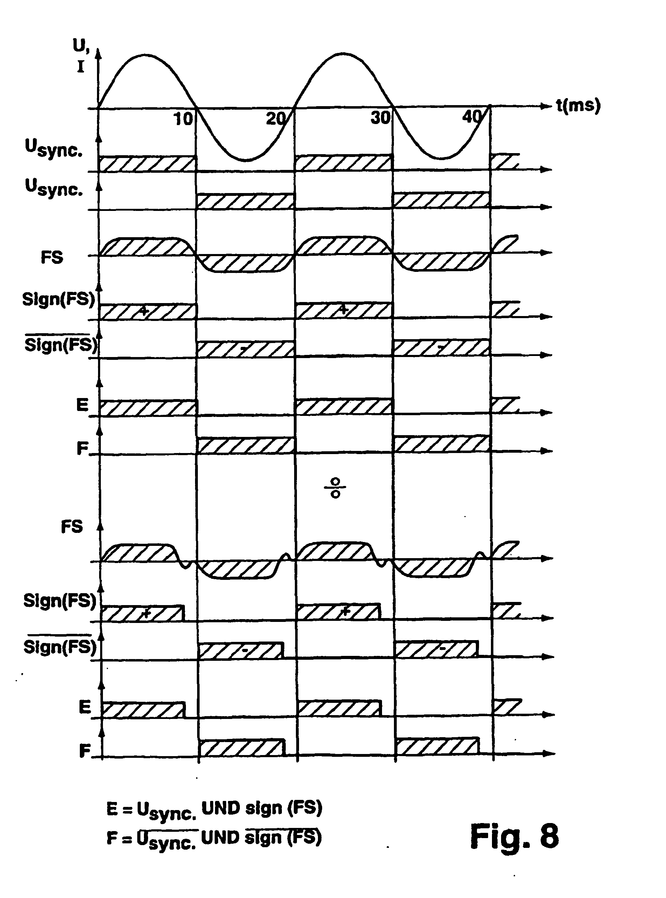

Im oben beschriebenen Fall eines zu langsam abklingenden Drosselstromes reagiert der Regler während der positiven Halbwelle mit einem negativen Fehlersignal, und entsprechend umgekehrt während der negativen Halbwelle (siehe hierzu in Figur 8 die klein ausgebildete negative Halbwelle im Fehlersignal FS gegen Ende einer positiven Halbwelle bzw. die Ausbildung einer kleinen positiven Halbwelle gegen Ende der negativen Halbwelle). Dieses Verhalten im Fehlersignal FS dient in vorteilhafter Weise zur Ansteuerung der Schalter E bzw. F, in dem das Vorzeichen des Fehlersignals SIGN(FS) mit dem Synchronisationssignal U_{synch} über eine UND-Verknüpfung logisch verbunden wird. So wird der Schalter E ausschließlich dann geschlossen, wenn die positive Halbwelle UND ein positives Fehlersignal vorliegen. Für die Ansteuerung des Schalters F werden die negierten Signale von U_{synch.} sowie SIGN(FS) über eine UND-Schaltung logisch miteinander verknüpft.

Mit Hilfe einer derartigen, selbstregelnden Zeittaktung der Schalter E sowie F können deren Öffnungszeitpunkte automatisch optimal bestimmt werden. Auf diese Weise kann der höchste Wirkungsgrad bei geringsten Verzerrungen im Strom und geringsten EMV-Probleme beim Betrieb des erfindungsgemäßen Wechselrichters erzielt werden.

Eine alternative, technisch durchaus realisierbare Ausführungsform eines erfindungsgemäß ausgebildeten Wechselrichters ist ebenso denkbar, indem anstelle der vorstehend beschriebenen Verbindungspfade 9, 10 mit den darin enthaltenen Schaltern E, F sowie Gleichrichtern DE, DF ein einziger Verbindungspfad mit einem einzigen, hochfrequent schaltenden Schalter eingesetzt wird. Der einzige hochfrequent schaltende Schalter ist gerade zu jenen Zeiten zu schließen, in denen die Schaltereinheiten A bis D, wie sie vorstehend erläutert mit einer symmetrischen Taktung betrieben werden, geöffnet sind. Ebenso gilt es, den Schalter gegen Ende der Halbwellen in der entsprechenden geöffneten Stellung zu belassen, um den Entmagnetisierungsvorgang der Drosselinduktivitäten L₁, L₂, wie vorstehend erläutert, abklingen zu lassen.

Die in Figur 1 dargestellte Anordnung ist prinzipiell auch für einen Einsatz als Inselwechselrichter geeignet. Hierbei kann die speisende Energiequelle entweder ein Solargenerator (z. B. zur Notstromversorgung bei ausreichender momentaner Solargeneratorleistung) oder typischerweise ein Batteriespeicher oder eine Brennstoffzelle sein. Im Falle eines Inselbetriebes muss der Wechselrichter selbst eine in Spannung und Frequenz stabile sinusförmige Ausgangsspannung bereitstellen, wozu er intern einen sinusförmigen Spannungssollwert aus z. B. einer Tabelle oder durch Echtzeit-Berechnung generiert. Weiterhin muss er auch einen Energierückfluss aus dem Netz In Richtung auf den Pufferkondensator oder die speisende Quelle (z. B. eine Batterie) erlauben (4-Quadranten-Betrieb). Dies ist im Falle eines Inselbetriebes mit reaktiven Lasten und entsprechenden Phasenverschiebungen zwischen Strom und Spannung zwingend erforderlich.

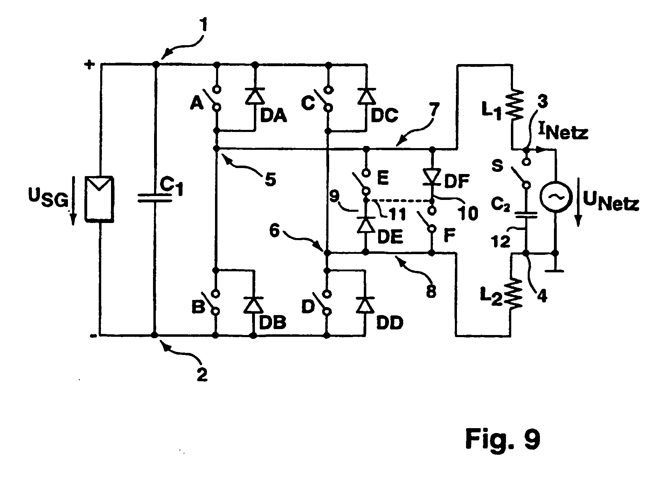

Für einen Inselbetrieb wird daher die Schaltung aus Figur 1 gemäß Figur 9 um einen Ausgangskondensator C₂ erweitert, der über einen Schalter S in der Betriebsart Inselbetrieb parallel zu den Ausgangsklemmen des Wechselrichters geschaltet wird. Dieser Ausgangskondensator C₂ wirkt in bekannter Weise als Energiepuffer im Ausgangskreis und dient z. B. der Aufrechterhaltung der gewünschten sinusförmigen Spannung bei sprunghaften Laständerungen (z. B. bei einer Last mit Phasenanschnittsteuerung).

Weiterhin ist eine Änderung der Taktung der Schalter gemäß Figur 10 gegenüber dem netzgekoppelten Betrieb erforderlich. Während in der Betriebsart "Netzeinspeisung" der Wechselrichter immer wie ein Tiefsetzsteller arbeitet und aus der hohen Solargeneratorspannung eine sinusmodulierte niedrigere Ausgangsspannung erzeugt, ist in der Betriebsart "Inselbetrieb" eine zeitweise Umkehrung der Energiefiussrichtung erforderlich, bei welcher der Wechselrichter als Hochsetztsteller arbeitet und Energie von dem niedrigeren Ausgangsspannungsniveau auf das höhere Spannungsniveau des Eingangskondensators C₁ bzw. der speisenden Batterie hochsetzt. Das hierzu notwendige Verhalten des Wechselrichters als Hochsetzsteller lässt sich durch eine Ansteuerung der Schalter gemäß Figur 10 erreichen. Im Gegensatz zu Figur 7 werden in entsprechenden Abschnitten des Spannungs-Sollwertes hier die Schalter E bzw. F im Gegentakt zu den Brückenschaltern A, D bzw. B, C getaktet. So wird z. B. während der positiven Halbwelle der Schalter E wie beschrieben permanent eingeschaltet, der Schalter F jedoch gegenphasig zu dem Schalterpaar A, D angesteuert. Damit ergibt sich die Möglichkeit, dass sich bei positiver Ausgangsspannung U_{Netz} über den geschlossenen Schalter F ein negativer, in den Wechselrichter hineinfließender Drosselstrom I_{Netz} aufbaut. Wird im nächsten Taktabschnitt der Schalter F geöffnet, so kommutiert der Drosselstrom zunächst auf die Dioden DA und DD, so dass ein Energiefluss in den Pufferkondensator C₁ bzw. im Falle einer Speisung des Wechselrichters aus einer Batterie in diese Batterie möglich ist. Werden nach Ablauf einer kleinen Verzögerungszeit, die zur Vermeidung von Überlappungen der Schließzeiten der Schalter erforderlich ist, die Schalter A und D geschlossen, so kann der Strom alternativ Ober diese beiden Elemente In die Quelle zurück fließen. Der Freilaufpfad 9 mit dem Schalter E und der Diode DE Ist während dieses Vorgangs der Energierückspeisung ohne Funktion, übermimmt aber bei einer Umkehrung der Energieflussrichtung sofort wieder wie beschrieben seine Aufgabe als Freilaufpfad für positive Ausgangsströme I_{Netz}.

Die Umschaltung zwischen den beiden Betriebsarten kann problemlos im laufenden Betrieb erfolgen, so dass ein 4-Quadranten-Betrieb auch im Netzparallelbetrieb möglich ist, falls der Wechselrichter z. B. zur Blindstromkompensation oder als aktives Oberwellenfilter eingesetzt werden soll. Weiterhin ist auch eine Umschaltung zwischen den im Stand der Technik beschriebenen Taktungsarten und den neuartigen Verfahren möglich, um z. B. in der Nähe des Nulldurchganges einen glatten Übergang von einer Halbwelle zur anderen zu erzielen.

### Bezugszeichenllste

- 1, 2: Gleichspannungsanschlüsse
- 3, 4: Wechselspannungsanschlüsse
- 5, 6: Verbindungsknoten
- 7, 8: Verbindungsleitungen
- 9, 10: Verbindungspfade
- 11: Elektrische Verbindung
- 12: Verbindungspfad
- SG: Solargenerator
- C₁: Pufferkondensator (Eingang)
- C₂: Pufferkondensator (Ausgang)
- A, B, C, D: Schaltereinheiten
- E, F, S: Schalter
- DA, DB, DC, DD, DE, DF: Gleichrichterdioden
- L₁, L₂: Drosselinduktivitäten
- W: Wechselrichter
- SG: Solargenerator
- K: Knotenpunkt

## Patentansprüche

1. Wechselrichter zum Einspeisen der aus einem Solargenerator stammenden Energie in ein geerdetes Netz, wobei der Wechselrichter folgende Merkmale aufweist:
zwei Solargeneratoranschlüsse (1, 2);
einen Energiezwischenspeicher (C1) zum Puffern der aus dem Solargenerator stammenden Energie;
eine Brückenschaltung, die parallel zu dem Energiezwischenspeicher (C1) geschaltet ist, und die wenigstens zwei Paralleläste aufweist, die jeweils zwei in Reihe geschaltete Schaltereinheiten (A, B; C, D) aufweisen, zu denen jeweils eine Gleichrichterdiode (DA, DB, DC, DD) parallel geschaltet ist; und
wenigstens zwei Wechselspannungsanschlüsse (3, 4), von denen jeder einzeln über eine Verbindungsleitung (7, 8), in der jeweils eine Drosselinduktivität (L1, L2) vorgesehen ist, mit einem der Paralleläste der Brückenschaltung jeweils zwischen zwei Schaltereinheiten (A, B; C, D) über einen Verbindungsknoten (5, 6) verbunden ist,
**dadurch gekennzeichnet, dass**
zwischen den wenigstens zwei Verbindungsleitungen (7, 8) eine Schaltungsanordnung (E,DE,F,DF,9,10,11) vorgesehen ist, die derart ansteuerbar ist, dass die Schaltungsanordnung in einem ersten Zustand die wenigstens zwei Verbindungsleitungen (7, 8) elektrisch miteinander verbindet und in einem zweiten Zustand die wenigstens zwei Verbindungsleitungen (7, 8) elektrisch trennt.

2. Wechselrichter nach Anspruch 1, mit Mitteln zum Öffnen eines Paares von Schaltereinheiten (A, D; B, C) der Brückenschaltung während einer Mehrzahl von Zeitabschnitten, wobei die Schaltungsanordnung zumindest in einem Teil der Mehrzahl von Zeitabschnitten in dem ersten Zustand ist.

3. Wechselrichter nach Anspruch 2, bei dem
die Schaltereinheiten eine erste Schaltereinheit (A), eine zweite Schaltereinheit (B), eine dritte Schaltereinheit (C) und eine vierte Schaltereinheit (D) umfassen,
ein erstes Paar von Schaltereinheiten aus der ersten Schaltereinheit (A) aufgebaut ist, mit Mitteln zur Herstellung einer Verbindung zwischen dem ersten Anschluss des Energiezwischenspeichers (C1) und der ersten Drosselinduktivität (L1), sowie der vierten Schaltereinheit (D), mit Mitteln zur Herstellung einer Verbindung zwischen dem zweiten Anschluss des Energiezwischenspeichers (C1) und der zweiten Drosselinduktivität (L2), und
ein zweites Paar von Schaltereinheiten aus der zweiten Schaltereinheit (B) aufgebaut ist, mit Mitteln zur Herstellung einer Verbindung zwischen dem zweiten Anschluss des Energiezwischenspeichers (C1) und der ersten Drosselinduktivität (L1), sowie der dritten Schaltereinheit (C), mit Mitteln zur Herstellung einer Verbindung zwischen dem ersten Anschluss des Energiezwischenspeichers (C1) und der zweiten Drosselinduktivität (L2).

4. Wechselrichter nach einem der Ansprüche 1 bis 3, mit Mitteln zum Versetzen der Schaltungsanordnung in den zweiten Zustand, wenn eines der Paare von Schaltereinheiten (A, D; B, C) der Brückenschaltung geschlossen ist.

5. Wechselrichter nach Anspruch 4, mit Mitteln zum getakteten Öffnen und Schließen des ersten Paares der Schaltereinheiten (A, D), während das zweite Paar der Schaltereinheiten (B, C) offen ist, und mit Mitteln zum getakteten Öffnen und Schließen des zweiten Paares der Schaltereinheiten (B, C), während das erste Paar der Schaltereinheiten (A, D) offen ist.

6. Wechselrichter nach Anspruch 4, mit Mitteln zum getakteten öffnen und Schließen des ersten Paares der Schaltereinheiten (A, D) zumindest während eines Abschnitts einer Halbwelle der Wechselspannung des Netzes, während das zweite Paar der Schaltereinheiten (B, C) offen ist, und mit Mitteln zum getakteten Öffnen und Schließen des zweiten Paares der Schaltereinheiten (B,C) zumindest während eines Abschnitts der nächsten Halbwelle der Wechselspannung des Netzes, während das erste Paar der Schaltereinheiten (A, D) offen ist.

7. Wechselrichter nach Anspruch 6, mit Mitteln zum Versetzen der Schaltungsanordnung in den zweiten Zustand im Bereich des Übergangs von der einen Halbwelle zu der nächsten Halbwelle.

8. Wechselrichter nach einem der vorhergehenden Ansprüche, mit Mitteln zum getakteten Betreiben der Schaltungsanordnung zwischen dem ersten und dem zweiten Zustand zumindest während eines Abschnitts einer Halbwelle der Wechselspannung des Netzes, zur Erzielung einer Energieflussrichtung vom geerdeten Netz zum Energiezwischenspeicher (C1).

9. Verfahren zum Einspeisen der aus einem Solargenerator stammenden Energie in ein geerdetes Netz, wobei das Verfahren folgende Schritte umfasst:
während zumindest eines Abschnitts einer Halbwelle der Wechselspannung des Netzes, getaktetes Verbinden und Trennen eines ersten Anschlusses eines Energiezwischenspeichers (C1) mit einer ersten Drosselinduktivität (L1) und eines zweiten Anschlusses des Energiezwischenspeichers (C1) mit einer zweiten Drosselinduktivität (L2);
während zumindest eines Abschnitts einer nächsten Halbwelle der Wechselspannung des Netzes, getaktetes Verbinden und Trennen des ersten Anschlusses des Energiezwischenspeichers (C1) mit der zweiten Drosselinduktivität (L2) und des zweiten Anschlusses des Energiezwischenspeichers (C1) mit der ersten Drosselinduktivität (L1);
**gekennzeichnet durch**
Trennen der Anschlüsse des Energiezwischenspeichers (C1) von der ersten Drosselinduktivität (L1) und von der zweiten Drosselinduktivität (L2), wenn die erste Drosselinduktivität (L1) und die zweite Drosselinduktivität (L2) an ihren netzabgewandten Seiten elektrisch miteinander verbunden sind.

10. Verfahren nach Anspruch 9, bei dem während zumindest eines Teils der Mehrzahl von Zeitabschnitten, in denen die Anschlüsse des Energiezwischenspeichers (C1) von den Drosselinduktivitäten (L1, L2) elektrisch getrennt sind, die erste Drosselinduktivität (L1) und die zweite Drosselinduktivität (L2) an ihren netzabgewandten Seiten elektrisch miteinander verbunden werden.

11. Verfahren nach Anspruch 9 oder 10, bei dem zur Erzielung einer Energieflussrichtung vom geerdeten Netz zum Energiezwischenspeicher (C1) zumindest während eines Abschnitts einer Halbwelle der Wechselspannung des Netzes die Drosselinduktivitäten (L1, L2) an ihren netzabgewandten Seiten getaktet elektrisch miteinander verbunden und voneinander getrennt werden.

## Claims

1. An inverter for feeding the energy originating from a solar generator to a grounded network, the inverter comprising:
two solar generator terminals (1, 2);
an energy buffer (C1) for buffering the energy originating from the solar generator;
a bridge circuit which is connected in parallel to the energy buffer (C1) and comprises at least two parallel branches which each comprise two switch units (A, B; C, D) connected in series, in parallel to each of which a rectifier diode (DA, DB, DC, DD) is connected; and
at least two alternating voltage terminals (3, 4) each of which is individually connected, via a connection line (7,8) in which one respective choke inductivity (L1, L2) is provided, to one of the parallel branches of the bridge circuit between two switch units (A, B; C, D) via a connection node (5, 6),
**characterized in that**
between the at least two connection lines (7, 8), a circuit arrangement (E, DE, F, DF, 9, 10, 11) is provided which may be controlled such that the circuit arrangement electrically connects the at least two connection lines (7, 8) in a first state and electrically separates the at least two connection lines (7, 8) in a second state.

2. The inverter in accordance with claim 1, comprising means for opening a pair of switch units (A, D; B, C) of the bridge circuit during a plurality of time intervals, the circuit arrangement being in the first state at least in a part of the plurality of time intervals.

3. The inverter in accordance with claim 2, wherein
the switch units include a first switch unit (A), a second switch unit (B), a third switch unit (C) and a fourth unit (D),
a first pair of switch units is set up of the first switch unit (A) comprising means for making a connection between the first terminal of the energy buffer (C1) and the first choke inductivity (L1), and the fourth switch unit (D) including means for making a connection between the second terminal of the energy buffer (C 1) and the second choke inductivity (L2), and
a second pair of switch units is set up of the second switch unit (B) including means for making a connection between the second terminal of the energy buffer (C1) and the first choke inductivity (L1), and the third switch unit (C) including means for making a connection between the first terminal of the energy buffer (C1) and the second choke inductivity (L2).

4. The inverter in accordance with one of claims 1 to 3, comprising means for bringing the circuit arrangement to the second state when one of the pairs of switch units (A, D; B, C) of the bridge circuit is closed.

5. The inverter in accordance with claim 4, comprising means for opening and closing the first pair of switch units (A, D) in a clocked manner while the second pair of the switch units (B, C) is open, and means for opening and closing the second pair of switch units (B, C) in a clocked manner while the first pair of switch units (A, D) is open.

6. The inverter in accordance with claim 4, comprising means for opening and closing the first pair of switch units (A, D) in a clocked manner at least during a section of a half-wave of the alternating voltage of the network while the second pair of switch units (B, C) is open, and means for opening and closing the second pair of switch units (B, C) in a clocked manner at least during a section of the next half-wave of the alternating voltage of the network while the first pair of switch units (A, D) is open.

7. The inverter in accordance with claim 6, comprising means for bringing the circuit arrangement to the second state in the range of the transition from the one half-wave to the next half-wave.

8. The inverter in accordance with one of the preceding claims, comprising means for operating the circuit arrangement in a clocked manner between the first and second states at least during a section of a half-wave of the alternating voltage of the network so as to achieve a direction of energy flowing from the grounded network to the energy buffer (C1).

9. A method for feeding the energy originating from a solar generator to a grounded network, the method comprising the steps of:
during at least a section of a half-wave of the alternating voltage of the network, connecting and separating a first terminal of an energy buffer (C1) to a first choke inductivity (L1) and a second terminal of the energy buffer (C1) to a second choke inductivity (L2) in a clocked manner;
during at least a section of a next half-wave of the alternating voltage of the network, connecting and separating the first terminal of the energy buffer (C1) to the second choke inductivity (L2) and the second terminal of the energy buffer (C1) to the first choke inductivity (L1) in a clocked manner;
**characterized by**:
separating the terminals of the energy buffer (C1) from the first choke inductivity (L1) and from the second choke inductivity (L2) when the first choke inductivity (L1) and the second choke inductivity (L2) are electrically connected to each other on their respective sides facing away from the network.

10. The method in accordance with claim 9, wherein during at least a part of the plurality of periods where the terminals of the energy buffer (C1) are electrically separated from the choke inductivities (L1, L2), the first choke inductivity (L1) and the second choke inductivity (L2) are electrically connected to each other on their respective sides facing away from the network.

11. The method in accordance with claims 9 or 10, wherein for achieving a direction of energy flowing from the grounded network to the energy buffer (C1), at least during a section of a sub-wave of the alternating voltage of the network, the choke inductivities (L1, L2) are electrically connected to each other and separated from each other in a clocked manner on their respective sides facing away from the network.

## Revendications

1. Onduleur destiné à alimenter l'énergie provenant d'un générateur photovoltaïque vers un réseau connecté, l'onduleur présentant les caractéristiques suivantes:
deux connexions de générateur photovoltaïque (1, 2);
un accumulateur d'énergie intermédiaire (C1) destiné à tamponner l'énergie provenant du générateur photovoltaïque;
un circuit de pont qui est monté parallèle à l'accumulateur d'énergie intermédiaire (C1) et qui présente au moins deux branches parallèles qui présentent, chacune, deux unités de commutation connectées en série (A, B; C, D) avec chacune desquelles est connectée en parallèle une diode de redressement (DA, DB, DC, DD); et
au moins deux connexions de tension alternative (3, 4), chacune d'elles étant reliées individuellement, par une ligne de connexion (7, 8) dans laquelle est chaque fois prévue une inductance de bobine (L1, L2), à l'une des branches parallèles du circuit de pont chaque fois entre deux unités de commutation (A, B; C, D) par l'intermédiaire d'un noeud de connexion (5, 6),
**caractérisé par le fait que**
entre les au moins deux lignes de connexion (7, 8) est prévu un aménagement de circuit (E, DE, F, DF, 9, 10, 11) qui est activable de sorte que l'aménagement de commutation, dans un premier état, connecte les au moins deux lignes de connexion (7, 8) électriquement l'une à l'autre et, dans un deuxième état, déconnecte les au moins deux lignes de connexion (7, 8) électriquement l'une de l'autre.

2. Onduleur selon la revendication 1, avec des moyens pour ouvrir une paire d'unités de commutation (A, D; B, C) du circuit de pont pendant une pluralité de segments de temps, l'aménagement de commutation étant, au moins pendant une partie de la pluralité de segments de temps, dans le premier état.

3. Onduleur selon la revendication 2, dans lequel
les unités de commutation comprennent une première unité de commutation (A), une deuxième unité de commutation (B), une troisième unité de commutation (C) et une quatrième unité de commutation (D),
une première paire d'unités de commutation est composée de la première unité de commutation (A), avec des moyens pour établir une connexion entre la première connexion de l'accumulateur d'énergie intermédiaire (C1) et la première inductance de bobine (L1), ainsi que de la quatrième unité de commutation (D), avec des moyens pour établir une connexion entre la deuxième connexion de l'accumulateur d'énergie intermédiaire (C1) et la deuxième inductance de bobine (L2), et
une deuxième paire d'unités de commutation est composée de la deuxième unité de commutation (B), avec des moyens pour établir une connexion entre la deuxième connexion de l'accumulateur d'énergie intermédiaire (C1) et la première inductance de bobine (L1), ainsi que de la troisième unité de commutation (C), avec des moyens pour établir une connexion entre la première connexion de l'accumulateur d'énergie intermédiaire (C1) et la deuxième inductance de bobine (L2).

4. Onduleur selon l'une des revendications 1 à 3, avec des moyens pour amener l'aménagement de commutation dans le deuxième état lorsqu'une des paires d'unités de commutation (A. D; B, C) du circuit de pont est fermée.

5. Onduleur selon la revendication 4, avec des moyens pour ouvrir et fermer de manière cadencée la première paire d'unités de commutation (A, D) tandis que la deuxième paire d'unités de commutation (B, C) est ouverte, et des moyens pour ouvrir et fermer de manière cadencée la deuxième paire d'unités de commutation (B, C) tandis que la première paire d'unités de commutation (A, D) est ouverte.

6. Onduleur selon la revendication 4, avec des moyens pour ouvrir et fermer de manière cadencée la première paire d'unités de commutation (A, D) au moins pendant un segment d'une demi-onde de la tension alternative du réseau, tandis que la deuxième paire d'unités de commutation (B, C) est ouverte, et avec des moyens pour ouvrir et fermer de manière cadencée la deuxième paire d'unités de commutation (B, C)au moins pendant un segment de la demi-onde suivante de la tension alternative du réseau, tandis que la première paire d'unités de commutation (A, D) est ouverte.

7. Onduleur selon la revendication 6, avec des moyens pour amener l'aménagement de commutation dans le deuxième état dans la zone de transition d'une demi-onde à l'autre.

8. Onduleur selon l'une des revendications précédentes, avec des moyens pour faire fonctionner de manière cadencée l'aménagement de commutation entre le premier et le deuxième état au moins pendant un segment d'une demi-onde de la tension alternative du réseau, pour obtenir une direction de flux d'énergie du réseau connecté vers l'accumulateur d'énergie intermédiaire (C1).

9. Procédé pour alimenter l'énergie provenant d'un générateur photovoltaïque vers un réseau connecté, le procédé comportant les étapes suivantes consistant à:
pendant au moins un segment d'une demi-onde de la tension alternative du réseau, connecter et déconnecter de manière cadencée une première connexion d'un accumulateur d'énergie intermédiaire (C1) avec une première inductance de bobine (L1) et une deuxième connexion de l'accumulateur d'énergie intermédiaire (C1) avec une deuxième inductance de bobine (L2);
pendant au moins un segment d'une demi-onde suivante de la tension alternative du réseau, connecter et déconnecter de manière cadencée la première connexion de l'accumulateur d'énergie intermédiaire (C1) avec la deuxième inductance de bobine (L2) et la deuxième connexion de l'accumulateur d'énergie intermédiaire (C1) avec la première inductance de bobine (L1);
**caractérisé par** le fait de
déconnecter les connexions de l'accumulateur d'énergie intermédiaire (C1) de la première inductance de bobine (L1) et de la deuxième inductance de bobine (L2) lorsque la première inductance de bobine (L1) et la deuxième inductance de bobine (L2) sont connectées électriquement l'une à l'autre de leurs côtés opposés au réseau.

10. Procédé selon la revendication 9, dans lequel, pendant au moins une partie de la pluralité de segments de temps pendant lesquels les connexions de l'accumulateur d'énergie intermédiaire (C1) sont déconnectées électriquement des inductances de bobine (L1, L2), la première inductance de bobine (L1) et la deuxième inductance de bobine (L2) sont connectées électriquement l'une à l'autre de leurs côtés opposés au réseau.

11. Procédé selon la revendication 9 ou 10, dans lequel, pour obtenir une direction de flux d'énergie du réseau connecté vers l'accumulateur d'énergie intermédiaire (C1) au moins pendant un segment d'une demi-onde de la tension alternative du réseau, les inductances de bobine (L1, L2) sont connectées électriquement l'une à l'autre et déconnectées électriquement l'une de l'autre de manière cadencée de leurs côtés opposés au réseau.
